# FASCICULE DE BREVET EUROPEEN

(11) **EP 1 669 594 B1**
(45) Date de publication et mention de la délivrance du brevet: **02.01.2008**
(21) Numéro de dépôt: 05292391.9
(22) Date de dépôt: 10.11.2005
(51) Int. Cl.: F02N 15/08, F02N 15/04

(54) **Dispositif de démarrage d'un moteur thermique**
Vorrichtung zum Anlassen einer Brennkraftmaschine
Device for starting an internal combustion engine

(30) Priorité: 07.12.2004 FR 0412986
(43) Date de publication de la demande: 14.06.2006
(73) Titulaire: VALEO EQUIPEMENTS ELECTRIQUES MOTEUR, 94017 Créteil Cedex (FR)
(72) Inventeur: Dupeux, Benoit, 38690 Oyeux (FR); Metral, Jean-Sébastien, 38290 La Verpilliere (FR)
(74) Mandataire: Gamonal, Didier

(56) Documents cités:
- EP-A- 0 384 808
- DE-A- 10 003 741
- DE-C- 400 657
- FR-A- 2 828 596
- FR-A- 2 861 139

## Description

### DOMAINE TECHNIQUE DE L'INVENTION

La présente invention concerne un dispositif de démarrage, aussi appelé démarreur, pour l'entraînement d'un moteur thermique, appelé aussi moteur à combustion interne, notamment de véhicule automobile, au moyen d'une poulie, tel que décrit dans la demande de brevet français n° 0350376 déposée le 28 juillet 2003, publiée le 4 février 2005 sous le numéro FR 2 856 366 et représenté sur les figures 1a et 1b annexés.

### ETAT DE LA TECHNIQUE

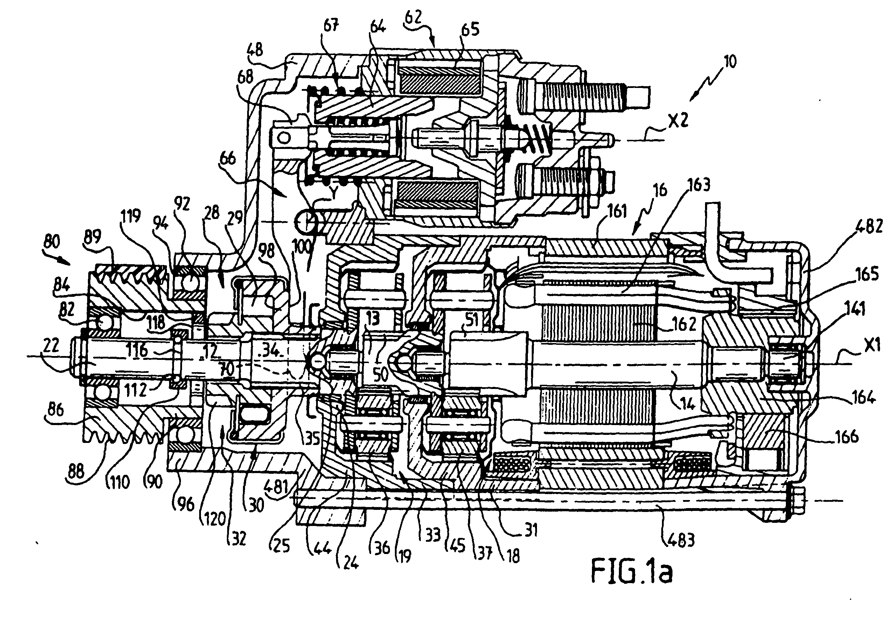

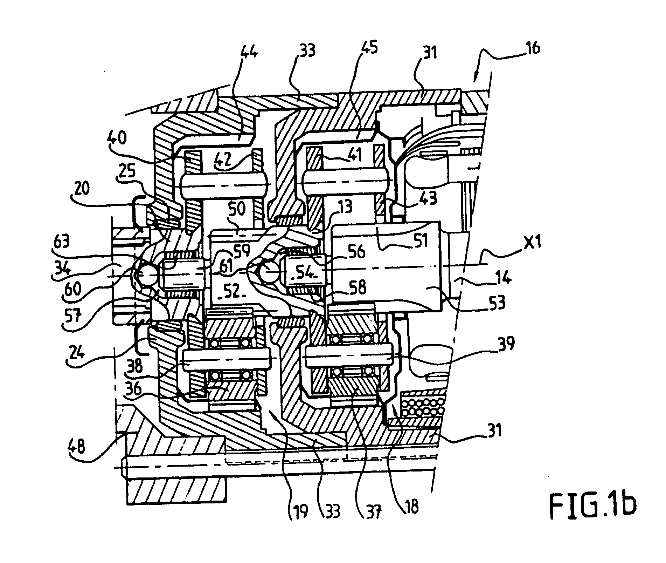

Le dispositif de démarrage 10 (figures 1a, 1b) comporte un arbre de sortie 12 ou arbre d'entraînement, qui est destiné à être entraîné en rotation par l'arbre d'induit 14 d'un moteur électrique 16, ici par l'intermédiaire de deux réducteurs de vitesses à train épicycloidal avant 19, dit aussi premier réducteur, et arrière 18, dit aussi second réducteur, montés en cascade ou série en sorte que leur taux de réduction se multiplient.

L'arbre de sortie 12 et l'arbre d'induit 14 sont coaxiaux d'axe X1.

L'extrémité libre arrière 20 de l'arbre de sortie 12 est guidée en rotation par un palier arrière 24, avec interposition d'une douille de guidage arrière 25.

Un équipage mobile 28 comprend une roue libre arrière 30 qui entraîne un pignon avant 32. L'équipage mobile 28 est monté coulissant axialement sur un tronçon intermédiaire cannelé 34 de l'arbre de sortie 12 de façon à être solidaire de ce dernier en rotation.

Le premier réducteur 19 (figure 1b) comporte un ensemble de satellites 36 dont les axes de rotation 38 sont portés par un flasque 40 d'orientation transversale, c'est-à-dire perpendiculaire à l'axe X1, qui est solidaire en translation et en rotation de l'extrémité libre arrière 20 de l'arbre de sortie et qui est fixé sur ce dernier par sertissage.

Les satellites 36 sont immobilisés axialement en translation par une plaque 42 emmanchée à force sur les axes 38 des satellites 36.

Ce réducteur 19 comporte aussi une couronne à denture intérieure 44, qui est réalisée en une seule pièce avec une jupe annulaire axiale externe 33 fixée dans la carcasse ou boîtier 48 du démarreur 10. Cette couronne 44 présente à l'avant un fond (non référencé) en forme de flasque d'orientation transversale troué centralement pour passage de l'arbre 12. La douille 25 intervient entre la périphérie externe de l'arbre 12 et la périphérie interne du flasque de la couronne 44.

Les satellites 36 engrènent avec des cannelures 50 portées par un tronçon avant 52 de l'arbre 13 de sortie de mouvement du deuxième réducteur arrière 18.

L'extrémité libre avant 59 de l'arbre 13 de sortie du réducteur arrière 18 est guidée en rotation dans un perçage axial borgne 57 qui est réalisé dans la face arrière de l'extrémité libre arrière 20 de l'arbre d'entraînement avec interposition d'une douille de guidage 63. L'extrémité avant 59 de l'arbre 13 est calée en translation vers l'avant par une bille de calage 60 qui est logée dans le fond du perçage borgne 57.

Le deuxième réducteur 18 est semblable au premier réducteur 19 et comporte un ensemble de satellites 37 dont les axes de rotation 39 sont portés par un flasque 41 d'orientation transversale, qui est solidaire en translation et en rotation de l'arbre 13 de sortie de mouvement et qui est fixé sur ce dernier par sertissage.

Les satellites 37 sont immobilisés axialement en translation par une plaque 43 emmanchée à force sur les axes 39 des satellites 37.

Ce réducteur 18 comporte aussi une couronne à denture intérieure 45 qui est réalisée en une seule pièce avec une jupe annulaire axiale 31 externe fixée dans la carcasse ou boîtier 48 du démarreur 10. Cette couronne présente un fond en forme de flasque transversal troué avec interposition radiale d'une douille de guidage entre la périphérie interne du flasque transversal de la couronne 45 et la périphérie externe de l'arbre 13.

Les satellites 37 engrènent avec des cannelures 51 portées par un tronçon avant 53 de l'arbre d'induit 14.

L'extrémité libre avant 54 de l'arbre d'induit 14 est guidée en rotation dans un perçage axial borgne 56 qui est réalisé dans la face arrière de l'extrémité libre arrière de l'arbre de sortie 13 avec interposition d'une douille de guidage 58. L'extrémité avant 54 de l'arbre 14 est calée en translation vers l'avant par une bille de calage 61 qui est logée dans le fond du perçage 56.

Le démarreur 10 comporte aussi un contacteur électromagnétique 62 (figure la), connu en soi dans le domaine des démarreurs de véhicule automobile, muni d'un noyau magnétique mobile 64, dont les déplacements sont provoqués par un bobinage ou enroulement annulaire coaxial 65, dit aussi solénoide, d'axe X2 parallèle à l'axe X1. Ce noyau commande le déplacement axial de l'équipage mobile 28 par l'intermédiaire d'un levier 66 qui est monté basculant autour d'un axe intermédiaire Y orthogonal aux axes X1 et X2.

Le noyau mobile 64 agit sur l'extrémité supérieure 68 du levier 66, lorsqu'il se déplace vers l'arrière entraîné par le solénoide 65, de manière à provoquer un déplacement axial correspondant d'arrière en avant de l'extrémité inférieure 70 du levier 66 qui est ici conformée en fourche pour agir sur l'équipage 28.

On alimente le solénoide 65 en courant électrique pour provoquer à la fois le déplacement axial de l'équipage mobile 28 vers l'avant et la mise en marche du moteur électrique 16 à l'aide d'un contact mobile (non référencé) actionné par le noyau mobile 64.

Pour plus de précisions on se reportera par exemple au document FR A 2 795 884, qui décrit notamment le contact mobile, le ressort dents contre dents, le ressort de rappel et le noyau fixe du contacteur.

Le moteur électrique 16, lorsqu'il est alimenté électriquement via le contact mobile du contacteur, entraîne en rotation l'arbre d'induit 14, qui transmet ce mouvement de rotation à l'arbre de sortie 12 par l'intermédiaire des deux réducteurs consécutifs 18 et 19.

Le carter ou boîtier 48 loge, exception faite d'une partie du contacteur 62, l'ensemble des composants du démarreur qui, pour l'entraînement d'un moteur à combustion interne appelé aussi moteur thermique (non représenté), comporte une poulie rainurée 80 qui est agencée à l'extérieur du boîtier 48, et qui est coaxiale d'axe X1 avec l'arbre d'entraînement 12 dont l'extrémité libre avant 22 est guidée en rotation par la poulie 80 avec interposition d'un roulement à billes avant 82 agencé à l'intérieur de l'alésage axial 84 qui traverse le corps tubulaire 86 de la poulie 80, dont le tronçon avant est rainuré extérieurement 88 pour recevoir une courroie 89.

Le tronçon arrière 90 du corps 86 de la poulie 80 est de diamètre réduit et il est monté à rotation dans le carter ou boîtier 48 par l'intermédiaire d'un roulement arrière à billes 92 qui est reçu dans un logement concave 94 formé dans une extrémité avant ouverte tubulaire 96 du carter ou boîtier 48.

La conception de la poulie 80 et des roulements 82 et 92 est telle que la poulie 80 est fixe axialement par rapport au carter 48 selon l'axe X1.

Le démarreur 10 comporte ainsi, d'arrière en avant, un empilage axial, d'axe X1, constitué du moteur électrique 16 avec son arbre d'induit 14, les deux réducteurs consécutifs 18 et 19, l'équipage mobile 28 à roue libre 30 et la poulie de sortie de mouvement 80.

Les déplacements axiaux vers l'avant de l'équipage mobile 28, appelé lanceur, avec son pignon avant 32 sont limités par une butée axiale avant 110, qui est ici un jonc monté sur l'arbre 12 par un anneau élastique 112 monté dans une gorge 116 de l'arbre 12.

Pour constituer un mécanisme commandé d'accouplement en rotation, ou embrayage, avec le pignon denté 32, la partie arrière 90 de l'alésage interne 84 de la poulie fixe axialement 80 est dentée intérieurement avec un groupe de dents pour constituer une couronne dentée intérieurement 118 dans laquelle le pignon 32 avec ses dents complémentaires 120 peut pénétrer axialement d'arrière en avant sous l'action de l'effort appliqué à l'équipage mobile 28 par la fourchette 70.

Grâce au mécanisme d'accouplement 32-118, il est possible de désolidariser la poulie 80 en rotation de la roue libre 30 et donc de l'arbre d'entraînement 12 qui ne fonctionne donc pas en continu pendant de très longues périodes de fonctionnement et dans un environnement très contraignant tel que celui d'un moteur thermique.

La roue libre 30 est de structure générale connue à galets cylindriques 29 du type couramment utilisé dans les démarreurs à pignon de sortie dont les performances, les qualités et la fiabilité sont parfaitement connues et adaptées au contexte automobile. De plus, une telle roue est de coût réduit et ne nécessite qu'une lubrification réduite.

Le pignon 32, qui constitue l'élément d'entrée de mouvement du mécanisme commandé d'accouplement, comporte des dents 120 en saillie radialement vers l'extérieur réparties angulairement de manière régulière.

Les dents 119 de la couronne dentée de la poulie 80 sont complémentaires des dents 120, et elles peuvent toutes être chanfreinées à leurs extrémités axiales pour faciliter l'introduction axiale du pignon 32 dans la couronne 118, c'est à dire le crabotage de la roue libre 30 et de la poulie 80.

Lorsque l'alimentation de l'actionneur linéaire que constitue le contacteur 62 est coupée, le ressort 67 de rappel du noyau 64 rappelle l'équipage mobile 28, par l'intermédiaire du levier 66, axialement vers l'arrière.

Lorsque le moteur thermique est démarré, la poulie 80 est entraînée en permanence en rotation une vitesse comprise entre 2.000 et 18.000 tours/minute qui est fonction du régime de rotation du moteur, et du rapport d'entraînement via la courroie 89 entre la poulie du vilebrequin du moteur thermique et la poulie 80 du démarreur 10.

Lorsque l'embrayage d'accouplement 32, 118 est débrayé, seule la poulie 80 et les roulements 82 et 92 tournent en permanence. Les autres composants coaxiaux du démarreur 10 ne sont pas entraînés en rotation.

Le moteur électrique 16 comprend un stator 161, un rotor 162 muni d'un paquet de tôles à encoches recevant le bobinage 163, un collecteur 164 à lames 165 électriquement conductrices relié au bobinage 163, et des balais 166 maintenus au contact des lames 165 par des organes de rappels élastiques.

Ici le carter 48 est divisé en une partie avant 481 et une partie arrière 482 solidarisées par des tirants 483, les jupes 31 et 33 et le stator 161 étant empilés axialement et maintenus pressés les uns contre les autres entre les parties avant 481 et arrière 482.

Les jupes 31 et 33 comportent à leur périphérie externe des échancrures (non référencées) pour passage complémentaire des tirants 483 en sorte qu'elles sont immobilisées en rotation par les tirants 483 du carter 48, qui porte le contacteur 62 s'étendant au dessus du moteur électrique.

La partie arrière 482 constitue un palier de guidage pour une partie d'extrémité libre arrière 141 de l'axe d'induit 14.

Les dispositifs de démarrage de ce type sont longs axialement.

Cette longueur est due à la présence de l'équipage mobile 28, et à la nécessité de prévoir un débattement axial suffisant pour permettre au pignon 32 de se désengager complètement de la couronne dentée 118.

La demande de brevet EP 384 808 décrit une machine électrique comportant un train épicycloïdal dans lequel une couronne est liée au châssis par une roue libre. La demande de brevet FR2 828 569 décrit une machine électrique tournante comportant une poulie portant un satellite via un axe.

### OBJET DE L'INVENTION

Dans ce contexte, la présente invention a pour but de pallier les défauts mentionnés ci-dessus.

Cet objectif est atteint par un dispositif de démarrage pour l'entraînement d'un moteur thermique, notamment de véhicule automobile, par l'intermédiaire d'au moins une poulie, ce dispositif comprenant un carter, un moteur électrique doté d'un arbre d'induit et au moins un premier réducteur de vitesses à train épicycloïdal destiné à lier en rotation la poulie à l'arbre d'induit, le réducteur comprenant plusieurs pignons satellites et une première couronne fixe par rapport au carter et pourvue d'une denture interne engrenant les pignons satellites , les pignons satellites étant montés libres en rotation sur la poulie, qui constitue le porte satellite du réducteur de vitesses à train épicycloïdal.

La poulie peut être montée folle autour d'une partie axiale fixe solidaire au carter.

Le dispositif de démarrage de l'invention peut aussi présenter en combinaison une ou plusieurs des caractéristiques suivantes.
- Le réducteur peut comprendre une pluralité d'axes de rotation solidaires de la poulie sur lesquels les pignons satellites sont montés fous.
- Les axes de rotation peuvent être fixés sur une face axiale arrière de la poulie.
- Le montage de la poulie autour de la partie fixe est réalisé dans un mode de réalisation via des moyens de palier, tels qu'au moins un roulement à billes.
- Le dispositif peut comprendre un second réducteur de vitesse monté en série avec le premier réducteur de vitesse.
- Le second réducteur de vitesse peut comprendre un second pignon solaire entraîné en rotation par l'arbre d'induit, plusieurs seconds pignons satellites engrenant le second pignon solaire, un porte satellites sur lequel les seconds pignons satellites sont montés libres en rotation, une seconde couronne fixe par rapport au carter pourvue d'une denture interne engrenant les seconds pignons satellites, et un arbre de sortie de mouvement solidaire du porte satellites et entraînant le pignon solaire du premier réducteur.
- Le dispositif peut comprendre une couronne commune aux deux réducteurs et formant les première et seconde couronnes.
- Dans ce cas, la couronne peut être cylindrique et porter une denture commune aux deux réducteurs.
- Alternativement, la couronne peut être étagée et comprendre un premier tronçon cylindrique de premier diamètre constituant la première couronne et un second tronçon cylindrique de second diamètre constituant la seconde couronne.
- Une rondelle d'étanchéité est prise en sandwich entre le carter et la couronne.
- La rondelle d'étanchéité constitue une butée axiale pour l'extrémité arrière de la poulie.
- L'arbre de sortie de mouvement peut être monté fou sur une extrémité libre avant de l'arbre d'induit, une partie terminale de cette extrémité étant engagée à rotation dans un perçage axial de la partie axiale fixe.
- La couronne et le carter peuvent être solidarisés en rotation par des parties en saillie de l'un engagées dans des parties en creux de l'autre.
- La couronne peut être bloquée axialement par rapport au carter par des bossages du carter en saillie vers l'intérieur de ce carter.
- Les première et seconde couronnes peuvent être indépendantes l'une de l'autre.
- Le pignon solaire du premier réducteur est solidaire du porte satellite du second réducteur et constitue l'arbre de sortie de mouvement.
- La poulie est configurée pour la réception d'une courroie ou d'une chaîne.

### BREVE DESCRIPTION DES DESSINS

D'autres caractéristiques et avantages de l'invention ressortiront clairement de la description qui en est faite ci-dessous, à titre indicatif et nullement limitatif, en référence aux figures annexées, parmi lesquelles :
- la figure 1a est une vue en coupe axiale d'un dispositif de démarrage selon l'art antérieur,
- la figure 1b est une vue agrandie d'une partie de la figure 1a, et
- la figure 2 est une vue en coupe axiale d'un dispositif de démarrage conforme à l'invention.

### DESCRIPTION D'EXEMPLES DE REALISATION DE L'INVENTION

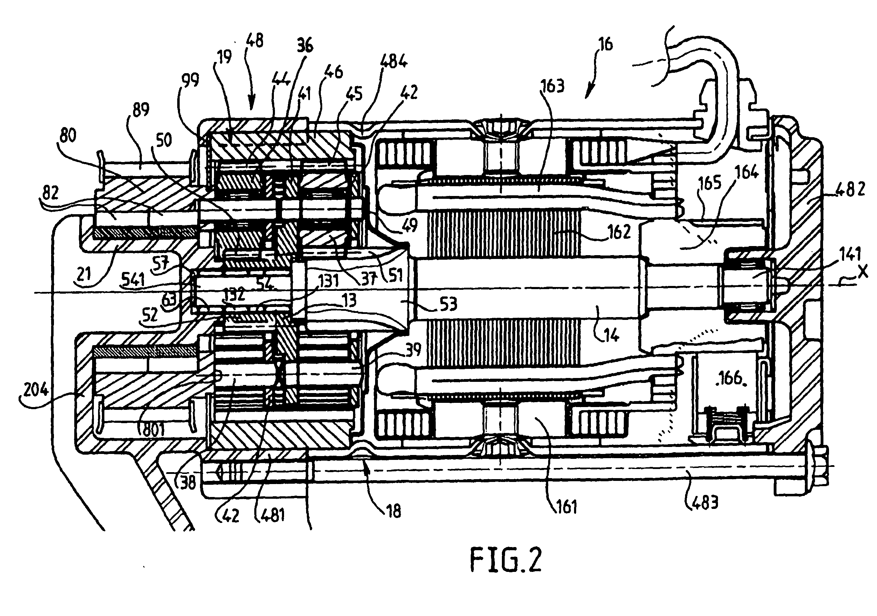

Dans la description qui va suivre, il est fait référence à une orientation d'avant en arrière, correspondant à l'orientation de gauche à droite sur les figures 1a/b et 2.

Seules les différences entre l'invention et l'art antérieur seront décrites ci-dessous.

On utilisera pour décrire l'invention illustrée sur la figure 2 les mêmes références numériques que celles utilisées dans la description des figures 1a et 1b pour désigner des pièces identiques ou de même fonction.

Le dispositif de démarrage, appelé aussi démarreur, représenté sur la figure 2 comprend un carter 48, un moteur électrique 16 doté d'un arbre d'induit 14, entraîné en rotation par le moteur électrique 16 lorsque celui-ci est alimenté électriquement, et des premier et second réducteurs de vitesses à train épicycloidal 19 et 18 liant en rotation la poulie 80 à l'arbre d'induit 14.

Dans ce mode de réalisation la poulie 80 comporte à sa périphérie externe une gorge pour recevoir la courroie 89. En variante, comme visible à la figure 1a, cette poulie comporte pluralité de rainures circonférentielles 88 pour recevoir de manière complémentaire la courroie 89.

Les premier et second réducteurs de vitesses à train épicycloidal 19 et 18 sont appelés réducteurs avant et arrière respectivement.

Le réducteur arrière 18 comporte un porte satellites 41 et un arbre de sortie de mouvement 13.

Le premier réducteur avant 19 comprend un premier pignon solaire 52 destiné à être entraîné en rotation par l'arbre d'induit 14, plusieurs pignons satellites 36 engrenant le pignon solaire 52 et une couronne 44 fixe par rapport au carter 48 pourvue d'une denture interne engrenant les pignons satellites 36, qui sont immobilisés axialement et en translation par une plaque 42 emmanchée à force sur les axes 38 des satellites 36.

Le pignon solaire 52 est, suivant une caractéristique, constitué par le tronçon avant à cannelures 50 de l'arbre de sortie 13 du réducteur arrière 18. Cet arbre 13 et donc ce pignon 52 sont de forme creuse. Le pignon 52 est solidaire du porte satellites 41 du deuxième train 18.

Ce porte satellites 41 est en forme de flasque transversal qui s'étend perpendiculairement à l'axe X1 à l'arrière du pignon 52.

Dans la figure 2 le porte satellites 41 et le pignon solaire 52 sont d'un seul tenant. En variante le porte satellite 41 est rapporté par exemple par sertissage sur le pignon 52.

Le pignon 52 est traversé centralement, de manière décrite ci-après, par la partie avant 54 de diamètre réduit de l'arbre d'induit 14.

Le porte satellite 41 est adjacent, suivant une caractéristique, à la plaque 42 du premier réducteur 19.

Grâce à ces deux dispositions on réduit l'encombrement axial du dispositif de démarrage.

Selon une caractéristique de l'invention, les pignons satellites 36 sont montés libres en rotation sur la poulie 80, de telle sorte que cette poulie joue le rôle de porte satellite du train épicycloidal avant 19 et constitue la sortie de ce réducteur 19.

Plus précisément, le réducteur avant 19 comprend une pluralité d'axes de rotation 38 solidaires de la poulie 80 sur lesquels les pignons satellites 36 sont montés fous. Les axes sont emmanchés à force dans des cavités borgnes de la poulie 80.

Les axes de rotation 38 sont fixés sur une face axiale arrière 801 de la poulie 80, et s'étendent tous parallèlement à l'axe X1, vers l'arrière à partir de la face 801 et donc en porte à faux.

Ainsi la poulie remplace le porte satellites 40 des figures 1a et 1b en sorte que l'on supprime une pièce. De plus on supprime la douille de guidage 25 de ces figures car on tire partie du ou des roulements 82, décrits ci-après, associés à la poulie.

Le carter 48 se prolonge vers l'avant par un nez 204 conformé en une partie axiale fixe 21 cylindrique, d'axe X1, autour duquel la poulie 80 est montée folle, les roulements à billes 82 étant interposés entre la partie axiale fixe 21 et l'alésage axial 84 central de la poulie 80, qui traverse le corps de celle-ci. Ces roulements à billes 82 sont identiques contrairement aux roulements 82, 92 de la figure 1b.

En variante on remplace les roulements 82 par un roulement à deux rangées de billes ou par des roulements à rouleaux ou à aiguilles. Des moyens de palier interviennent donc entre la périphérie externe de la partie fixe 21 et la périphérie interne de la poulie 80 délimitant l'alésage 84.

Ainsi au moins un palier intervient radialement entre la partie fixe 21 et la périphérie interne de la poulie 80, c'est-à-dire la périphérie interne du corps de la poulie 80.

De préférence la partie fixe 21 est venue de moulage avec la partie avant 481 du carter 48. Plus précisément le nez 204 se raccorde à la partie avant par au moins un bras de support, visible partiellement à la figue 2.

Cette partie avant 481 à nez 204 est donc de préférence en matière moulable, ici à base d'aluminium.

Cette partie avant 481 comporte ici des oreilles à trous taraudés, dont l'une est visible à la figure 2, pour le vissage des tirants 483.

Cette partie avant 481 est dotée également des portions trouées, par exemple en forme d'oreilles, pour fixation du démarreur sur une partie fixe, telle que le carter du moteur thermique. Ce moteur thermique est dans un mode de réalisation fixe. Ici le moteur thermique est celui d'un véhicule automobile, tel qu'un véhicule de tourisme ou un bateau à moteur. La partie avant 481 diffère donc de celle d'un démarreur classique notamment par le nez 204.

Bien entendu en variante le nez 204 est rapporté sur la partie avant 481, par exemple par soudage ou vissage.
Ce nez 204 est configuré pour présenter dans la partie basse de la figure 2 une cavité délimitée en partie par la périphérie externe de la partie fixe 21. Cette cavité sert au logement de la poulie 80 et de la courroie 89.
Cette cavité est ouverte dans le haut de la figure 2 pour passage de la courroie de transmission de mouvement 89.
La partie fixe 21 présente une face arrière de diamètre réduit. Un perçage borgne 57 est ménagé dans cette face arrière
La partie avant 481 présente également une ouverture (non référencée) pour le passage de la partie arrière de la poulie 80 et de la face arrière de la partie fixe 21. Cela permet de réduire encore la longueur axiale.
L'arbre d'induit 14 comporte, comme dans les figures la et 1b, un tronçon 53 doté de cannelures 51 pour formation du pignon solaire du deuxième train épicycloidal arrière 18 et une partie d'extrémité avant 54 de diamètre réduit. Cette partie avant 54 est engagée dans le perçage borgne 57 ménagé dans une face arrière de la partie axiale fixe 21 du nez 204, une douille de guidage 63 étant interposée radialement entre la périphérie externe de la partie avant 54 et la paroi du perçage borgne 56.
Ici cette partie 54 traverse l'ensemble pignon 52-porte satellites 41 formant également l'arbre 13 simplifié et de longueur réduite par rapport à celui des figures 1a, 1b.

Le réducteur arrière 18 comporte une couronne 45 fixe par rapport au carter 48, le pignon solaire 53 appartenant de manière précitée à l'arbre d'induit 14, des satellites 37 engrenant avec les cannelures 51 du pignon 53, le porte satellite 41, en forme de flasque, et une plaque 43 emmanchée à force sur les axes 39 portés par le flasque 41 pour immobilisation axiale et en translation des satellites 37, qui engrènent avec les dentures internes de la couronne 45.

Quand le moteur électrique 16 est activé, l'arbre d'induit 14 est entraîné en rotation par le rotor 162 et entraîne lui-même en rotation le pignon solaire 52 du réducteur avant 19 par l'intermédiaire du réducteur arrière 18.

Les pignons satellites 36 de ce réducteur sont entraînés en rotation autour des axes 38 par le pignon solaire 52 et roulent sur la couronne fixe 44, ce qui a pour effet d'entraîner la poulie en rotation autour de la partie axiale 21.

Comme le montre la figure 2, le dispositif de démarrage comporte une couronne 46 commune aux réducteurs avant et arrière 19 et 18. Cette couronne 46 présente une forme cylindrique d'axe X1, et porte une denture intérieure, les pignons satellites 36 et 37 des deux réducteurs engrenant ainsi la même denture, un tronçon avant de la couronne 46 constituant ainsi la première couronne 44 et un tronçon arrière de la couronne 46 constituant la seconde couronne 45.

Cette couronne 46 porte sur une face radialement externe des moyens de blocage en rotation par rapport au carter 48, par exemple des parties saillantes pénétrant dans des creux complémentaires du carter 48 ou vice versa.

La couronne 46 est également bloquée axialement par rapport au carter 48, par le biais de bossages 484 ménagés dans le carter 48 en saillie vers l'intérieur, d'un côté arrière de la couronne 46.

Les bossages 484 appartiennent à une culasse tubulaire du moteur électrique 16 portant le stator 161 de celui-ci La culasse est prise en sandwich entre les parties avant 481 et arrière 483 du carter 48 en étant serrée par les tirants 483.

On appréciera que la couronne commune 46 permet de réduire le nombre de pièces et la distance entre la plaque 42 du réducteur avant 19 et le porte satellites 41 du deuxième réducteur 18, qui ainsi sont adjacents. On notera que le porte satellites 41, en forme de flasque d'orientation transversal, présente une plus faible épaisseur à sa périphérie externe en sorte que les axes 38 peuvent venir au plus près des axes 39 . Le dispositif de démarrage est ainsi encore plus compact axialement.

Les axes 38, 39 d'orientation axiale des satellites 36, 38 sont alignés et implantés sur la même circonférence. Il en résulte, en combinaison avec la couronne 46, une standardisation des satellites 36, 37, des axes 38, 39 et des plaques 42, 43, les cannelures 50, 51 étant semblables, axialement dans le prolongement axial l'une de l'autre et de même diamètre moyen.

Avantageusement la couronne 46 est en matière plastique moulable pour réduire les bruits. Elle est dans un mode de réalisation en matière plastique thermodurcissable. Cette matière plastique est en variante renforcée par des fibres. Cette couronne 46 est de forme simple car elle est dépourvu de flasque ce qui permet de réduire l'encombrement axial, notamment entre les satellites des deux réducteurs 18, 19, et de supprimer des douilles de guidage.

On notera que le dispositif comprend un cache poussière 49 annulaire d'orientation générale radiale, dont un bord radialement intérieur s'étend au ras de la partie cannelée 51 de l'arbre d'induit 14, et dont le bord radialement externe est rigidement fixé sur la couronne 46, ce bord externe étant pincé entre les bossages 484 et une extrémité arrière de la couronne 46.

Le cache-poussière 49 est rigidement fixé sur la couronne 46, par exemple à l'aide de pions portés par la couronne 46, traversant des ouvertures correspondantes du cache-poussière 49 et écrasés à chaud (rivetage).

Le dispositif comprend encore une rondelle annulaire 99 d'étanchéité interposée axialement entre la couronne 46 et le fond avant du carter 48, cette rondelle 99 s'étendant dans un plan perpendiculaire à l'axe X1 et entourant la partie arrière de poulie 80.

La rondelle 99 bouche l'ouverture de la partie avant 481 du carter 48 en association avec la poulie 80 et la partie fixe 21.

Plus précisément la rondelle 99 est traversée par les parties arrières de la partie fixe 21 et de la poulie 80. Un faible jeu radial existe entre la rondelle et la partie arrière de la poulie 80.

Ainsi les deux réducteurs sont bien protégés contre la pollution. En outre les réducteurs 18,19 peuvent être graissés sans que la graisse ne vienne polluer la courroie 89, notamment grâce à la rondelle 99.

Cette rondelle 99 sert de butée axiale à l'extrémité arrière de la poulie 80. Cette extrémité arrière présente à cet effet un épaulement transversal (non référencé) pour coopérer avec la rondelle 99 constituant donc également une rondelle de butée.

Pour assurer le guidage de l'arbre de sortie 13 du réducteur arrière 18, cet arbre 13, formant un ensemble pignon 52-porte satellites 41, comprend un alésage central 131 le perçant axialement sur toute sa longueur, l'extrémité libre avant 54 de l'arbre d'induit 14 traversant cet alésage central 131 et étant engagé par sa partie terminale 541 dans le perçage axial borgne 57 de la face arrière de la partie 21 avec interposition radiale de la douille de guidage 63 entre la périphérie externe de la partie terminale 541 et la paroi radiale du perçage 57.

D'autres douilles de guidage 132 sont interposées entre la périphérie externe de l'extrémité libre avant 54 et la paroi radiale interne de l'alésage central 131, l'arbre 13 étant ainsi monté fou sur l'extrémité libre avant 54 à l'aide de moyens de palier, les douilles pouvant être remplacées par des roulements à aiguilles ou d'autres types de palier.

Suivant une caractéristique cette partie avant 54 sert ainsi de centreur au pignon 52.

On notera que l'arbre d'induit 14 présente un tronçon de butée 200 (non référencé), ici cylindrique, entre son extrémité avant 54 et son pignon 53. Ainsi un jeu axial existe entre le porte satellite 41 du pignon 52 et les rainures du pignon 53 de l'arbre 14 en sorte que les satellites chanfreinés 37 engrènent sur toute leur longueur avec les cannelures 51.

En outre l'alésage central 131 de l'ensemble pignon 52-porte satellites 41 présente au niveau de sa face arrière une augmentation de diamètre pour réception de la partie avant du tronçon de butée 200, dont la face avant prend appui contre l'épaulement transversale (non référencé) formé à la faveur de l'augmentation de diamètre de l'alésage 131.

Ainsi le pignon 52 est calé axialement entre la partie fixe 21 et le tronçon de butée 200.

Dans une variante de réalisation, la couronne 46 est étagée radialement, et comprend un tronçon cylindrique avant de premier diamètre constituant la couronne dentée 44 du réducteur avant 19 et un tronçon cylindrique arrière de second diamètre différent du premier constituant la couronne dentée 45 du réducteur arrière 18, les tronçons avant et arrière étant mutuellement solidaires par un épaulement.

Les tronçons avant et arrière portent chacun une denture interne qui lui est propre, les dentures pouvant être différentes à l'avant et à l'arrière.

Ici le moteur électrique 16 est du type de celui décrit dans le document EP A 0 749 194 auquel on se reportera pour plus de précisions. Il comporte des composants 162 à 166 semblables à ceux des figures 1a.

On peut immobiliser en rotation la couronne 46 à l'aide de plots engagés dans des rainure réalisées dans le bord de l'ouverture du prolongement arrière comme décrit dans le document FR A 2 787 833 auquel on se reportera.

On appréciera que grâce à l'invention on peut utiliser un maximum de pièces d'un démarreur du type standard.

La solution est donc économique et en outre peut encombrante axialement du fait que la partie arrière de la poulie 80 constitue la sortie du premier réducteur 19 et peut venir au plus près des satellites 36, grâce à l'ouverture de la partie avant 481 du carter.

On notera enfin que le dispositif de démarrage comprend également une seconde poulie menante (non représentée) entraînée en rotation, de préférence de manière débrayable, par le vilebrequin du moteur thermique, par exemple à l'aide d'une seconde poulie, liée en rotation à la poulie 80 par la courroie 89, et une roue libre (non représentée) de préférence interposée entre la seconde poulie et le vilebrequin, la roue libre permettant de désaccoupler le moteur électrique du moteur thermique quand le moteur thermique est lancé et donc quand le vilebrequin possède une vitesse de rotation supérieure à celle de la seconde poulie.

La roue libre est par exemple intégrée dans la seconde poulie menante.
Par exemple la roue libre 30, le levier 66, le mécanisme d'accouplement 32-118 et la partie avant du contacteur 62, dépourvu du contact mobile, du dispositif de démarrage des figures 1a et 1b sont associés à la poulie menante.
En variante le mécanisme d'accouplement fait appel à une roue libre et à un embrayage électromagnétique.

L'arbre d'induit 14 est accouplé en permanence à la poulie 80 via les réducteurs 18, 19.

Le dispositif de démarrage décrit ci-dessus présente de multiples avantages.

Il est particulièrement compact car les pignons satellites 36 du réducteur avant 19 sont montés directement sur une face arrière de la poulie 80, qui joue le rôle de porte satellites.

La roue libre 30 est déportée au niveau du vilebrequin, ce qui contribue à raccourcir encore la longueur axiale du dispositif car celui-ci ne comprend plus d'équipage mobile 28.

De plus, on peut de ce fait supprimer le contacteur électromagnétique 62, le noyau 64 et le levier 66, ce qui permet d'alléger le dispositif et de réduire l'encombrement axial. Ces éléments sont remplacés par un simple contacteur, par exemple mécanique ou électronique doté par exemple d'au moins un transistor faisant office d'interrupteur, permettant de commander l'alimentation électrique du moteur 16.

En variante on peut conserver une partie du contacteur électromagnétique (non représenté) alors simplifier car le noyau mobile de ce contacteur n'est pas attelé à un levier.

On a donc un grand nombre de choix pour implanter ce contacteur électromagnétique simplifié ou le simple contacteur.

Ici le contacteur est implanté à l'extérieur.

Bien entendu on peut monter ce contacteur par exemple sur le carter 48 ou sur la partie arrière 482.

Les avantages mentionnés ci-dessus sont atteints à l'aide d'un dispositif constitué d'un nombre de pièces considérablement réduit par rapport à l'art antérieur.

Enfin, on sait que les couples appliqués sur la poulie 80 sont très importants. Le fait de les transmettre directement des satellites à la poulie permet de rendre le dispositif plus robuste, puisque la chaîne de transmission des couples est plus courte et que le nombre de pièces soumises à ces couples est plus faible.

Dans les figures représentées la poulie est configurée à sa périphérie externe pour la réception d'une courroie et présente à cet effet au moins une gorge de réception de la courroie 89, qui à la figure 2 est une courroie à dents, la poulie 80 étant cannelée à cet effet.

En variante la poulie 80 comporte à sa périphérie externe une pluralité des dents et la courroie est remplacée par une chaîne.

Les moyens de transmission de mouvement intervenant entre le vilebrequin du moteur thermique et la poulie 80 comportent donc au moins une chaîne ou une courroie.

En variante les plaques 42, 43 sont supprimés et sont remplacées par exemple par une pluralité de rondelles de butée montées sur les axes 38, 39. En variante un absorbeur de chocs est prévu au sein de la couronne 46 commune aux deux réducteurs 18, 19. Cette couronne à absorbeurs de chocs comporte par exemple une partie extérieure fixe et une couronne interne montée de manière coaxiale dans la couronne extérieure. Cette couronne interne est pourvue de la denture interne engrenant avec les pignons satellites. Des organes élastiques sont également prévus. Ces organes interviennent entre la partie extérieure, dans un mode de réalisation en forme de couronne, et la couronne interne. Ces organes sont montés dans des logements en vis-à-vis réalisés dans lesdites couronnes.
Les organes élastiques consistent dans un mode de réalisation en des blocs en caoutchouc ou en élastomère. Dans un mode de réalisation la couronne fixe comporte des saillies dirigées radialement vers la couronne interne et la couronne interne des nervures dirigées radialement vers la couronne extérieure fixe, chaque bloc étant interposé ou inséré circonférentiellement entre les faces radiales en regard d'une saillie et d'une nervure comme visible par exemple dans le document FR 2 829 812. On peut également adopter les autres dispositions décrites dans ce document ou celles décrites dans le document FR 2 514 425.
Bien entendu on peut conserver la couronne 46 de la figure 2 et faire intervenir les organes élastiques entre les parties saillantes de la couronne précitées et les creux du carter précités. Dans ce cas il faut élargir les creux du carter 48, ces creux étant dans un mode de réalisation en forme de rainures d'orientation axiale et les saillies en forme de nervure d'orientation axiale pénétrant à jeu circonférentiel dans les rainures, ce jeu étant comblé par au moins un organe élastique ou en variante par deux organes élastiques intervenant de part et d'autre d'une nervure.
On appréciera la compacité radiale du dispositif de démarrage selon l'invention.

## Revendications

1. Dispositif de démarrage pour l'entraînement d'un moteur thermique, notamment de véhicule automobile, par l'intermédiaire d'au moins une poulie (80), ce dispositif comprenant un carter (48), un moteur électrique (16) doté d'un arbre d'induit (14), et au moins un premier réducteur de vitesses à train épicycloidal (19) destiné à lier en rotation la poulie (80) à l'arbre d'induit (14), le réducteur comprenant (14), plusieurs pignons satellites (36) et une première couronne (44) fixe par rapport au carter (48) et pourvue d'une denture interne engrenant les pignons satellites (36), ces pignons satellites (36) étant montés libres en rotation sur la poulie (80), qui constitue le porte satellite du réducteur épicycloidal (19), **caractérisé en ce que** la poulie (80) est montée folle autour d'une partie axiale fixe (21) solidaire du carter (48).

2. Dispositif selon la revendication 1, **caractérisé en ce que** le réducteur (19) comprend une pluralité d'axes de rotation (38) solidaires de la poulie (80) sur lesquels les pignons satellites (36) sont montés fous.

3. Dispositif selon la revendication 2, **caractérisé en ce que** les axes de rotation (38) sont fixés sur une face axiale arrière (801) de la poulie (80).

4. Dispositif selon l'une des revendications précédentes **caractérisé en ce qu'**il comprend un second réducteur de vitesses à train épicycloidal (18) monté en série avec le premier réducteur de vitesse (19).

5. Dispositif selon l'une quelconque des revendications précédentes, **caractérisé en ce que** le premier réducteur de vitesses à train épicycloïdal (19) comprend un premier pignon solaire (52) destiné à être entraîné en rotation par l'arbre d'induit (14) et **en ce que** les pignons satellites (36) de ce premier train (19) engrènent avec le premier pignon solaire (52).

6. Dispositif selon la revendication 5, **caractérisé en ce qu'**il comporte un second réducteur de vitesses à train épicycloidal (18) comprenant un second pignon solaire (53) destiné à être entraîné en rotation par l'arbre d'induit (14), plusieurs seconds pignons satellites (37) engrenant le second pignon solaire (53), un porte satellites (41) sur lequel les seconds pignons satellites (37) sont montés libres en rotation, une seconde couronne (45) fixe par rapport au carter (48) pourvue d'une denture interne engrenant les seconds pignons satellites (36), et un arbre de sortie de mouvement (13) solidaire du porte satellites (41) et entraînant le pignon solaire (52) du premier réducteur (19).

7. Dispositif selon la revendication 6, **caractérisé en ce qu'**il comprend une couronne (46) commune aux deux réducteurs et formant les première et seconde couronnes (44, 45).

8. Dispositif selon la revendication 7, **caractérisé en ce que** la couronne (46) est cylindrique et porte une denture commune aux deux réducteurs (18, 19).

9. Dispositif selon la revendication 7, **caractérisé en ce que** la couronne (46) est étagée et comprend un premier tronçon cylindrique de premier diamètre constituant la première couronne (44) et un second tronçon cylindrique de second diamètre constituant la seconde couronne (45).

10. Dispositif selon l'une quelconque des revendications 7 à 9, **caractérisé en ce que** l'arbre de sortie de mouvement (13) est monté fou sur une extrémité libre avant (54) de l'arbre d'induit (14), une partie terminale (541) de cette extrémité étant engagée à rotation dans un perçage axial (57) de la partie axiale fixe (21).

11. Dispositif selon l'une quelconque des revendications 6 à 10, **caractérisé en ce que** le premier pignon solaire (52) est doté d'un alésage central (131) et est solidaire du porte satellites (41) du second réducteur de vitesses (18) pour constituer avec ce porte satellites (41) l'arbre de sortie de mouvement (13) du second réducteur de vitesses (18) et **en ce que** l'arbre d'induit (14) comporte une extrémité libre avant (54) de diamètre réduit traversant l'alésage central (131) du premier pignon solaire (52).

12. Dispositif selon la revendication 11, **caractérisé en ce que** le porte satellites (41) du second réducteur de vitesses (18) est d'épaisseur réduite à sa périphérie externe.

13. Dispositif selon la revendication 11 ou 12, **caractérisé en ce que** des moyens de palier, tels que des douilles de guidage (132), interviennent entre la périphérie externe de l'extrémité libre avant (54) de l'arbre d'induit (14) et la périphérie interne du premier pignon solaire (52) délimitant l'alésage central de celui-ci.

14. Dispositif selon l'une quelconque des revendications 11 à 13, **caractérisé en ce que** l'arbre d'induit (14) présente un tronçon de butée (200) entre son extrémité libre avant (54) et une portion constituant le second pignon solaire (53) de l'arbre d'induit (14).

15. Dispositif selon la revendication 14, **caractérisé en ce que** la face avant du tronçon de butée (200) prend appui contre un épaulement transversal formé à la faveur d'une augmentation de diamètre que présente à l'arrière l'alésage central (131) du premier pignon solaire (52).

16. Dispositif selon l'une quelconque des revendications 7 à 15, **caractérisé en ce que** la couronne (46) et le carter (48) sont solidarisés en rotation par des parties en saillie de l'un engagées dans des parties en creux de l'autre.

17. Dispositif selon la revendication 16, **caractérisé en ce qu'**une rondelle (99) d'étanchéité est interposée axialement entre la couronne (46) et la face avant du carter (48).

18. Dispositif selon la revendication 17, **caractérisé en ce que** la face avant du carter (48)) présente une ouverture pour le passage de la partie arrière de la poulie (80) et de la face arrière de la partie fixe (21), **en ce que** la rondelle (99) d'étanchéité entoure la partie arrière de la poulie (80) et constitue une butée pour celle-ci.

19. Dispositif selon l'une quelconque des revendications 7 à 18, **caractérisé en ce que** la couronne (46) est bloquée axialement par rapport au carter (48) par des bossages (481) d'une culasse appartenant au carter (48)et en ce les bossages s'étendent en saillie vers l'intérieur de cette culasse.

20. Dispositif selon l'une quelconque des revendications précédentes, **caractérisé en ce que** la poulie (80) est configurée pour la réception d'une courroie (89).

## Claims

1. Starter device to drive a thermal engine, in particular of a motor vehicle, by means of at least one pulley (80), this device comprising a housing (48), an electric motor (16) which is provided with a rotor shaft (14), and at least a first epicycloidal gear train speed reducer (19) which is designed to connect the pulley (80) in rotation to the rotor shaft (14), the reducer (14) comprising a plurality of satellite pinions (36) and a first ring (44) which is fixed relative to the housing (48), and is provided with inner toothing which engages the satellite pinions (36), these satellite pinions (36) being fitted to as to rotate freely on the pulley (80), which constitutes the satellite-holder of the epicycloidal reducer (19), **characterised in that** the pulley (80) is fitted in an idle manner around a fixed axial part (21) which is integral with the housing (48).

2. Device according to claim 1, **characterised in that** the reducer (19) comprises a plurality of rotational shafts (38) which are integral with the pulley (80), on which the satellite pinions (36) are fitted in an idle manner.

3. Device according to claim 2, **characterised in that** the rotational shafts (38) are secured to a rear axial face (801) of the pulley (80).

4. Device according to one of the preceding claims, **characterised in that** it comprises a second epicycloidal gear train speed reducer (18) which is fitted in series with the first speed reducer (19).

5. Device according to any one of the preceding claims, **characterised in that** the first epicycloidal gear train speed reducer (19) comprises a first solar pinion (52) which is designed to be rotated by the rotor shaft (14) and **in that** the satellite pinions (36) of this first train (19) engage with the first solar pinion (52).

6. Device according to claim 5, **characterised in that** it comprises a second epicycloidal gear train speed reducer (18), comprising a second solar pinion (53) which is designed to be rotated by the rotor shaft (14), a plurality of second satellite pinions (37) engaging the second solar pinion (53), a satellite-holder (41) on which the second satellite pinions (37) are fitted such as to rotate freely, a second ring (45) which is fixed relative to the housing (48), and is provided with inner toothing with engages the second satellite pinions (36), and a movement output shaft (13) which is integral with the satellite-holder (41) and drives the solar pinion (52) of the first reducer (19).

7. Device according to claim 6, **characterised in that** it comprises a ring (46) which is common to the two reducers, and forms the first and second rings (44, 45).

8. Device according to claim 7, **characterised in that** the ring (46) is cylindrical, and supports toothing which is common to the two reducers (18, 19).

9. Device according to claim 7, **characterised in that** the ring (46) is stepped and comprises a first cylindrical section with a first diameter which constitutes the first ring (44), and a second cylindrical section with a second diameter which constitutes the second ring (45).

10. Device according to any one of claims 7 to 9, **characterised in that** the movement output shaft (13) is fitted in an idle manner on a front free end (54) of the rotor shaft (14), a terminal part (541) of this end being engaged such as to rotate in an axial bore (57) in the fixed axial part (21).

11. Device according to any one of claims 6 to 10, **characterised in that** the first solar pinion (52) is provided with a central bore (131) and is integral with the satellite-holder (41) of the second speed reducer (18), in order to constitute with this satellite-holder (41) the movement output shaft (13) of the second speed reducer (18), and **in that** the rotor shaft (14) comprises a front free end (54) with a reduced diameter which passes through the central bore (131) in the first solar pinion (52).

12. Device according to claim 11, **characterised in that** the satellite-holder (41) of the second speed reducer (18) has a reduced thickness at its outer periphery.

13. Device according to claim 11 or claim 12, **characterised in that** bearing means, such as guide sleeves (132) intervene between the outer periphery of the front free end (54) of the rotor shaft (14) and the inner periphery of the first solar pinion (52), thus delimiting the central bore in the latter.

14. Device according to any one of claims 11 to 13, **characterised in that** the rotor shaft (14) has a stop section (200) between its front free end (54) and a portion which constitutes the second solar pinion (53) of the rotor shaft (14).

15. Device according to claim 14, **characterised in that** the front face of the stop section (200) is supported against a transverse shoulder which is formed to assist an increase in diameter which exists at the rear of the central bore (131) in the first solar pinion (52).

16. Device according to any one of claims 7 to 15, **characterised in that** the ring (46) and the housing (48) are rendered integral in rotation by projecting parts of one engaged in recessed parts in the other.

17. Device according to claim 16, **characterised in that** a sealing washer (99) is interposed axially between the ring (46) and the front face of the housing (48).

18. Device according to claim 17, **characterised in that** the front face of the housing (48) has an opening for the passage of the rear part of the pulley (80) and of the rear face of the fixed part (21), and **in that** the sealing washer (99) surrounds the rear part of the pulley (80) and constitutes a stop for the latter.

19. Device according to any one of claims 7 to 18, **characterised in that** the ring (46) is blocked axially relative to the housing (48) by bosses (481) of a cylinder head which belongs to the housing (48), and **in that** the bosses project towards the interior of this cylinder head.

20. Device according to any one of the preceding claims, **characterised in that** the pulley (80) is configured for the receipt of a belt (89).

## Patentansprüche

1. Anlassvorrichtung zum Antrieb eines Verbrennungsmotors, insbesondere für Kraftfahrzeuge, über wenigstens eine Riemenscheibe (80), wobei diese Vorrichtung ein Gehäuse (48), einen Elektromotor (16) mit einer Ankerwelle (14) und wenigstens ein erstes Untersetzungs-Planetengetriebe (19) umfasst, das dazu bestimmt ist, die Riemenscheibe (80) drehfest mit der Ankerwelle (14) zu verbinden, wobei das Untersetzungsgetriebe mehrere Planetenräder (36) und ein erstes Hohlrad (44) umfasst, das im Verhältnis zum Gehäuse (48) ortsfest gelagert und mit einer Innenzahnung versehen ist, an der die Planetenräder (36) eingreifen, wobei diese Planetenräder (36) drehbeweglich auf der Riemenscheibe (80) gelagert sind, die den Planetenträger des Untersetzungs-Planetengetriebes (19) bildet, **dadurch gekennzeichnet, dass** die Riemenscheibe (80) lose um einen fest mit dem Gehäuse (48) verbundenen ortsfesten axialen Teil (21) gelagert ist.

2. Vorrichtung nach Anspruch 1, **dadurch gekennzeichnet, dass** das Untersetzungsgetriebe (19) mehrere fest mit der Riemenscheibe (80) verbundene Drehachsen (38) umfasst, an denen die Planetenräder (36) lose gelagert sind.

3. Vorrichtung nach Anspruch 2, **dadurch gekennzeichnet, dass** die Drehachsen (38) an einer hinteren axialen Fläche (801) der Riemenscheibe (80) befestigt sind.

4. Vorrichtung nach einem der vorangehenden Ansprüche, **dadurch gekennzeichnet, dass** sie ein zweites Untersetzungs-Planetengetriebe (18) umfasst, das mit dem ersten Untersetzungsgetriebe (19) in Reihe angeordnet ist.

5. Vorrichtung nach einem der vorangehenden Ansprüche, **dadurch gekennzeichnet, dass** das erste Untersetzungs-Planetengetriebe (19) ein erstes Sonnenrad (52) umfasst, das dazu bestimmt ist, durch die Ankerwelle (14) drehend angetrieben zu werden, und dass die Planetenräder (36) dieses ersten Getriebezugs (19) am ersten Sonnenrad (52) eingreifen.

6. Vorrichtung nach Anspruch 5, **dadurch gekennzeichnet, dass** sie ein zweites Untersetzungs-Planetengetriebe (18) umfasst, das ein zweites Sonnenrad (53) enthält, das dazu bestimmt ist, durch die Ankerwelle (14) drehend angetrieben zu werden, sowie mehrere zweite Planetenräder (37), die am zweiten Sonnenrad (53) eingreifen, einen Planetenträger (41), auf dem die zweiten Planetenräder (37) drehbeweglich gelagert sind, ein zweites Hohlrad (45), das im Verhältnis zum Gehäuse (48) ortsfest gelagert und mit einer Innenzahnung versehen ist, an der die zweiten Planetenräder (36) eingreifen, und eine Abtriebswelle (13), die fest mit dem Planetenträger (41) verbunden ist und das Sonnenrad (52) des ersten Untersetzungsgetriebes (19) antreibt.

7. Vorrichtung nach Anspruch 6, **dadurch gekennzeichnet, dass** sie ein Hohlrad (46) umfasst, das für die beiden Untersetzungsgetriebe gemeinsam vorgesehen ist und das erste und das zweite Hohlrad (44, 45) bildet.

8. Vorrichtung nach Anspruch 7, **dadurch gekennzeichnet, dass** das Hohlrad (46) zylindrisch ausgeführt ist und eine gemeinsame Zahnung für die beiden Untersetzungsgetriebe (18, 19) trägt.

9. Vorrichtung nach Anspruch 7, **dadurch gekennzeichnet, dass** das Hohlrad (46) abgestuft ist und ein erstes zylindrisches Teilstück mit einem ersten Durchmesser, das das erste Hohlrad (44) bildet, und ein zweites zylindrisches Teilstück mit einem zweiten Durchmesser, das das zweite Hohlrad (45) bildet, umfasst.

10. Vorrichtung nach einem der Ansprüche 7 bis 9, **dadurch gekennzeichnet, dass** die Abtriebswelle (13) an einem vorderen freien Ende (54) der Ankerwelle (14) lose gelagert ist, wobei ein Abschlussteil (541) dieses Endes drehbar in einer axialen Bohrung (57) des ortsfesten axialen Teils (21) eingesetzt ist.

11. Vorrichtung nach einem der Ansprüche 6 bis 10, **dadurch gekennzeichnet, dass** das erste Sonnenrad (52) mit einer mittigen Bohrung (131) versehen und fest mit dem Planetenträger (41) des zweiten Untersetzungsgetriebes (18) verbunden ist, um mit diesem Planetenträger (41) die Abtriebswelle (13) des zweiten Untersetzungsgetriebes (18) zu bilden, und dass die Ankerwelle (14) ein vorderes freies Ende (54) mit kleinerem Durchmesser umfasst, das durch die mittige Bohrung (131) des ersten Sonnenrads (52) hindurchgeht.

12. Vorrichtung nach Anspruch 11, **dadurch gekennzeichnet,dass** der Planetenträger (41) des zweiten Untersetzungsgetriebes (18) an seinem äußeren Umfang eine geringere Dicke aufweist.

13. Vorrichtung nach Anspruch 11 oder 12, **dadurch gekennzeichnet, dass** Lagerungsmittel, wie etwa Führungshülsen (132), zwischen dem äußeren Umfang des vorderen freien Endes (54) der Ankerwelle (14) und dem inneren Umfang des ersten Sonnenrads (52), der dessen mittige Bohrung begrenzt, zum Einsatz kommen.

14. Vorrichtung nach einem der Ansprüche 11 bis 13, **dadurch gekennzeichnet, dass** die Ankerwelle (14) ein Anschlagteilstück (200) zwischen ihrem vorderen freien Ende (54) und einem das zweite Sonnenrad (53) bildenden Abschnitt der Ankerwelle (14) aufweist.

15. Vorrichtung nach Anspruch 14, **dadurch gekennzeichnet, dass**, die vorderseitige Fläche des Anschlagteilstücks (200) an einer Querschulter zur Anlage kommt, die mittels einer Durchmesservergrößerung gebildet wird, weiche die mittige Bohrung (131) des ersten Sonnenrads (52) hinten aufweist.

16. Vorrichtung nach einem der Ansprüche 7 bis 15, **dadurch gekennzeichnet, dass** das Hohlrad (46) und das Gehäuse (48) durch vorstehende Teile eines dieser Elemente, die in vertiefte Teile des anderen eingesetzt sind, drehfest miteinander verbunden sind.

17. Vorrichtung nach Anspruch 16, **dadurch gekennzeichnet, dass** eine Dichtungsscheibe (99) axial zwischen dem Hohlrad (46) und der vorderseitigen Fläche des Gehäuses (48) eingefügt ist.

18. Vorrichtung nach Anspruch 17, **dadurch gekennzeichnet, dass** die vorderseitige Fläche des Gehäuses (48) eine Öffnung für den Durchgang des hinteren Teils der Riemenscheibe (80) und der rückseitigen Fläche des ortsfesten Teils (21) aufweist, dass die Dichtungsscheibe (99) den hinteren Teil der Riemenscheibe (80) umgibt und einen Anschlag für diese bildet.

19. Vorrichtung nach einem der Ansprüche 7 bis 18, **dadurch gekennzeichnet, dass** das Hohlrad (46) durch Vorsprünge (481) eines zum Gehäuse (48) gehörenden Jochs im Verhältnis zum Gehäuse (48) axial gesichert ist und dass sich die Vorsprünge zum Innern dieses Jochs hin vorstehend erstrecken.

20. Vorrichtung nach einem der vorangehenden Ansprüche, **dadurch gekennzeichnet, dass** die Riemenscheibe (80) im Hinblick auf die Aufnahme eines Riemens (89) gestaltet ist.
